# FASCICULE DE BREVET EUROPEEN

(11) **EP 4 048 529 B1**
(45) Date de publication et mention de la délivrance du brevet: **03.04.2024**
(21) Numéro de dépôt: 20807470.8
(22) Date de dépôt: 22.10.2020
(51) Int. Cl.: B60C 9/20, B60C 9/22, B60C 11/04, B60C 9/28, B60C 9/02

(54) **PNEUMATIQUE COMPRENANT UNE ARCHITECTURE OPTIMISEE**
REIFEN MIT OPTIMIERTER ARCHITEKTUR
TYRE COMPRISING AN OPTIMISED ARCHITECTURE

(30) Priorité: 23.10.2019 FR 1911850
(43) Date de publication de la demande: 31.08.2022
(73) Titulaire: COMPAGNIE GENERALE DES ETABLISSEMENTS MICHELIN, 63000 Clermont-Ferrand (FR)
(72) Inventeur: TOURNEUX, Vincent, 63040 CLERMONT-FERRAND Cedex 9 (FR); FABING, Daniel, 63040 CLERMONT-FERRAND Cedex 9 (FR); FRAYSSE, Patrice, 63040 CLERMONT-FERRAND Cedex 9 (FR)
(74) Mandataire: M.F.P. Michelin
(86) Numéro de dépôt international: PCT/FR2020/051905
(87) Numéro de publication internationale: WO 2021/079066

(56) Documents cités:
- FR-A1- 2 351 811
- FR-A1- 3 057 811
- US-A1- 2011 198 006

## Description

La présente invention concerne un pneumatique destiné à être monté sur un véhicule, et plus particulièrement le sommet d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Le plan circonférentiel médian dit plan équateur divise le pneumatique en deux demi tores sensiblement symétriques, le pneumatique pouvant présenter des dissymétries de bande de roulement, d'architecture, liées à la précision de fabrication ou au dimensionnement.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équateur, selon la direction axiale, que » et « plus éloigné du plan équateur, selon la direction axiale, que ». Une « distance radiale » est une distance par rapport à l'axe de rotation du pneumatique, et une « distance axiale » est une distance par rapport au plan équateur du pneumatique. Une « épaisseur radiale » est mesurée selon la direction radiale, et une « largeur axiale » est mesurée selon la direction axiale.

Dans ce qui suit, l'expression « à l'aplomb de » signifie « pour chaque méridien, radialement intérieur sensiblement dans la limite des coordonnées axiales délimitées par ». Ainsi « les points d'une couche de travail à l'aplomb d'un sillon » désignent pour chaque méridien, l'ensemble des points de la couche de travail radialement intérieurs au sillon dans la limite des coordonnées axiales délimitées par le sillon.

Dans ce qui suit, l'expression « en surplomb de » signifie « pour chaque méridien, radialement extérieur sensiblement dans la limite des coordonnées axiales délimitées par ». Ainsi « la nervure centrale en surplomb de l'ondulation centrale » désigne pour chaque méridien, la nervure de la bande de roulement radialement extérieure à l'ondulation centrale, située sensiblement dans la limite des coordonnées axiales délimitées par l'ondulation.

Les termes à l'aplomb et en surplomb indiquent qu'il y a un lien entre les largeurs axiales et les positions axiales des deux objets que ce terme relie.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

De plus, la bande de roulement d'un pneumatique est délimitée, selon la direction axiale, par deux surfaces latérales. La bande de roulement est en outre constituée par un ou plusieurs mélanges caoutchouteux. L'expression « mélange caoutchouteux » désigne une composition de caoutchouc comportant au moins un élastomère et une charge.

Le sommet comprend au moins une armature de sommet radialement intérieure à la bande de roulement. L'armature de sommet comprend au moins une armature de travail comprenant au moins une couche de travail composée d'éléments de renforcement parallèles entre eux formant, avec la direction circonférentielle, un angle compris entre 15° et 50°. L'armature de sommet peut également comprendre une armature de frettage comprenant au moins une couche de frettage comprenant des éléments de renforcement formant, avec la direction circonférentielle, un angle compris entre 0° et 10°, l'armature de frettage étant le plus souvent mais pas obligatoirement radialement extérieure aux couches de travail.

Pour un méridien donné, pour chaque couche d'éléments de renforcement d'armature de sommet, de travail, ou autre, une courbe linéaire par morceau, dite courbe radialement extérieure (CRE) de ladite couche, passe par le point le plus radialement extérieur de chaque élément de renforcement. Pour un méridien donné, pour toute couche d'éléments de renforcement d'armature de sommet, de travail, ou autre, une surface linéaire par morceau, dite courbe radialement intérieure (CRI) de la dite couche, passe par le point le plus radialement intérieur de chaque élément de renforcement. Les distances radiales entre une couche d'éléments de renforcement et tout autre élément du pneumatique, sont mesurées sur une coupe méridienne, depuis l'une ou l'autre de ces courbes et de manière à ne pas intégrer l'épaisseur radiale de ladite couche. Si le point de mesure, lié au deuxième élément, est radialement extérieur à la couche d'éléments de renforcement, la distance radiale est mesurée depuis la courbe radialement extérieure CRE à ce point ; et respectivement depuis la courbe radialement intérieure CRI à l'autre point de mesure si celui-ci est radialement intérieur à la couche d'éléments de renforcement. Ceci permet de prendre des distances radiales cohérentes d'un méridien à l'autre, sans avoir à tenir compte des variations locales possibles liées aux formes des sections des éléments de renforcement des couches.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement.

Une incision ou une rainure présente, sur la surface de roulement, deux dimensions principales caractéristiques : une largeur W et une longueur Lo, telle que la longueur Lo est au moins égale à 2 fois la largeur W. Une incision ou une rainure est donc délimitée par au moins deux faces latérales principales déterminant sa longueur Lo et reliées par une face de fond, les deux faces latérales principales étant distantes l'une de l'autre d'une distance non nulle, dite largeur W de l'incision ou de la rainure.

La profondeur de la découpure est la distance radiale maximale entre la surface de roulement et le fond de la découpure. La valeur maximale des profondeurs des découpures est nommée profondeur de sculpture D.

Un sillon est une rainure sensiblement circonférentielle, les faces latérales sont sensiblement circonférentielles en ce sens, que leur orientation peut varier localement autour de plus ou moins 45° autour de la direction circonférentielle mais que l'ensemble des motifs appartenant au sillon se retrouve tout autour de la bande de roulement, formant un ensemble sensiblement continu, c'est-à-dire présentant des discontinuités inférieures à 10% en longueur comparativement à la longueur des motifs.

Les sillons circonférentiels, ou un ensemble circonférentiel de rainures disposé sur toute la circonférence du pneumatique, constituent les frontières circonférentielles de nervures. Une nervure est un élément en relief sensiblement circonférentiel et sensiblement continu, composée des motifs de la sculpture soit compris entre un bord axial du pneumatique et une frontière circonférentielle, la plus axialement extérieure la plus proche, soit compris entre deux frontières circonférentielles. Les nervures sont sensiblement continues dans le sens ou des rainures d'épaisseur ou/et de largeur notablement plus faible que celles des sillons circonférentiels, peuvent prendre place dans la nervure. Par ailleurs, la nervure est sensiblement circonférentielle dans la mesure où ses frontières circonférentielles peuvent avoir une variation de position axiale selon le méridien considéré car un sillon circonférentiel peut avoir des faces latérales ondulantes circonférentiellement. Dans ce cas la largeur de la nervure, est la distance axiale minimale entre deux points des deux frontières de la nervure, quel que soient le ou les méridiens auxquels ils appartiennent.

Un pneumatique doit répondre à de multiples critères de performance portant sur des phénomènes comme l'usure, l'adhérence sur différents types de sol, la résistance au roulement, le comportement dynamique. Ces critères de performance conduisent parfois à des solutions s'opposant à d'autres critères. Pour améliorer le compromis global de performance, il est possible d'onduler les couches de travail comme le montre les demandes de brevets FR 3057811 A1, EP 35229085A1, EP35229087

Dans le contexte actuel de développement durable, l'économie de ressources et donc de matières premières est un des objectifs majeurs des industriels. Pour les pneumatiques de véhicule de tourisme, une des voies de recherche pour cet objectif, consiste à diminuer la masse et donc la résistance à rupture des éléments de renforcement des différentes couches composant l'armature de sommet ou l'armature de carcasse.

Cependant la diminution de la résistance à la rupture des éléments de renforcement du pneumatique présente l'inconvénient d'entraîner la baisse de la résistance à la perforation du sommet par certains objets. Ainsi il existe des règlements notamment américain (ASTM WK20631) et chinois (GB 9743-2007) basés sur la mesure de l'énergie nécessaire à la pénétration d'un indenteur à travers le sommet des pneumatiques. La baisse de la résistance à la perforation qu'amène l'utilisation d'éléments de renforcement dans un pneumatique ayant une résistance à rupture plus faible, a pour conséquence que ces pneumatiques ne satisfont plus ces règlements. Ces pneumatiques deviennent alors impropres à la vente dans ces pays, à l'importation soit en tant que pièces détachées, soit montés sur des véhicules. La conformité à ce règlement est dès lors un enjeu commercial important pour tous les manufacturiers fabricants ou non dans ces pays.

Ces tests de pénétration sont appelés couramment « tests de breaking energy ». L'énergie à rupture du pneumatique dans les conditions de test imposées par le règlement est donc nommée « performance en breaking energy ». Les tests et la performance associée seront ainsi nommés dans la suite du document. Pour des pneumatiques de même type, c'est-à-dire fabriqués dans une même usine, de même architecture, de même bande de roulement, les résultats sont dispersés de près de 10%.

Pour ce type de performance, la résistance à rupture des éléments de renforcement des couches de travail est considérée comme prépondérante comme le montre le brevet US8662128, via leur renforcement soit par l'augmentation de la densité, soit par l'augmentation du diamètre des fils élémentaires des éléments de renforcement des couches de travail. Il est également possible d'ajouter une couche d'une armature de renforcement local, dont les éléments de renforcement font un angle avec l'axe longitudinal compris entre 20 et 90° (DE102016202295, DE102013107475) entre l'armature de carcasse et l'armature de travail. Cependant ces solutions sont contraires à l'objectif premier des inventeurs qui est le gain de masse et de matières premières, ou le gain en performance à iso-masse.

Des pneumatiques à armatures de renforcement local sont connus de US 2011/198006 A1 et de FR2351811A1.

L'objectif principal de la présente invention est donc d'augmenter la performance en résistance à la pénétration d'un pneumatique sans dégrader les autres performances du pneumatique.

Cet objectif est atteint par un pneumatique comprenant :
- une bande de roulement destinée à entrer en contact avec un sol par l'intermédiaire d'une surface de roulement, un plan circonférentiel médian passant par le centre de la bande de roulement, la surface de roulement comprenant des rainures, les rainures formant un espace débouchant sur la surface de roulement et étant délimitée par au moins deux faces latérales principales reliées par une face de fond,
- au moins une et au plus deux nervures centrales, délimitées par des frontières circonférentielles, les frontières circonférentielles des nervures centrales étant des rainures sensiblement circonférentielles, appelées sillons circonférentiels, ou un ensemble circonférentiel de rainures, une nervure centrale étant telle que le plan circonférentiel médian passe entre ses deux frontières ou, si le plan circonférentiel médian passe par un sillon circonférentiel, telle que le plan circonférentiel médian passe à une distance d'une des frontières de ladite nervure centrale, au plus égale à 15 mm, les sillons circonférentiels ou les rainures de l'ensemble circonférentiel de rainures formant les frontières du ou des nervures centrales ayant une largeur W définie par la distance entre deux faces latérales, au moins égale à 5 mm et une profondeur D définie par la distance radiale maximale entre la surface de roulement et la face de fond, au moins égale à 2 mm,
- une armature de sommet, radialement intérieure à la bande de roulement, comprenant une armature de travail, et une armature de carcasse radialement intérieure à l'armature de sommet comprenant au moins une couche de carcasse, l'armature de travail comprenant au moins une couche de travail, chaque couche de travail s'étendant radialement depuis une courbe radialement intérieure jusqu'à une courbe radialement extérieure, chaque couche de travail comprenant des éléments de renforcement, au moins partiellement métalliques enrobés par un matériau élastomérique, parallèles entre eux et formant avec la direction circonférentielle du pneumatique, un angle dont la valeur absolue est au moins égale à 15° et au plus égale à 50°, la couche de travail la plus radialement extérieure comprenant au moins une ondulation centrale à l'aplomb d'au moins une nervure centrale, d'une amplitude au moins égale à 1 mm, chaque ondulation centrale étant telle que la portion de la couche de travail de l'ondulation centrale est radialement extérieure à la portion de la couche de travail à l'aplomb des faces de fond des sillons circonférentiels ou des rainures de l'ensemble circonférentiel de rainures délimitant la nervure centrale en surplomb de l'ondulation centrale considérée,
- au moins une armature de renforcement local, comprenant au moins une couche d'éléments de renforcement, parallèles entre eux et formant avec la direction circonférentielle du pneumatique, un angle dont la valeur absolue est au plus égale à 5°, étant à l'aplomb d'au moins une ondulation centrale de la couche de travail la plus radialement extérieure.

Le principe de l'invention est donc de créer au moins une ondulation autour du plan équateur, sur au moins la couche de travail la plus radialement extérieure à l'aplomb d'au moins une nervure de la bande de roulement. Cette ou ces ondulations rapprochent une partie de ladite couche de travail de la surface de roulement car cette partie de l'ondulation est radialement extérieure à la partie de ladite couche à l'aplomb des sillons circonférentiels ou des rainures de l'ensemble circonférentiel de rainures délimitant ladite nervure qui compte tenu de sa proximité au plan équateur est dite centrale. L'amplitude de l'ondulation est au moins égale au diamètre des éléments de renforcement de l'armature de renforcement local qui viendra se positionner à l'aplomb de ladite ondulation. On veillera à ce que la couche de sommet la plus radialement extérieure ne soit pas radialement extérieure au point le plus radialement extérieur du témoin d'usure du pneumatique afin de ne pas qu'elle ne se détériore en fin de vie du pneumatique par contact avec le sol.

En approchant, au moins la couche de travail la plus radialement extérieure de la surface de roulement sous les nervures les plus proches du plan équateur, sous des efforts axiaux ou/et transversaux sur lesdites nervures, le volume de gomme déformé est diminué par rapport aux solutions sans ondulation de la couche de travail la plus radialement extérieure. De ce fait, sous efforts transversaux ou circonférentiels, l'amplitude de la déformation de ladite nervure est diminuée et donc le comportement et la résistance au roulement du pneumatique sont améliorés. En ajustant la largeur axiale de la ou des armatures de renforcement local à la dimension des ondulations et donc des nervures qui sont en surplomb, il est possible de limiter au strict nécessaire l'apport en renforcement local.

L'expérience montre que pour améliorer la performance en tenue dynamique sous effort transversal, un des critères suffisant en lui-même est de diminuer la distance (do) entre la courbe radialement extérieure (CRE) de la couche de travail la plus radialement extérieure, en surplomb de l'ondulation, et la surface de roulement. Ceci permet de réduire les épaisseurs cisaillées de matériaux caoutchouteux de la bande de roulement et de réduire la production de chaleur due à l'hystérèse de ces matériaux. Ces effets sont bénéfiques à la fois pour la rigidité de la bande de roulement qui dépend de la température, et pour les performances en résistance au roulement et en endurance. L'ondulation de la couche de travail permet, en plus, d'accroitre la rigidité sous efforts transversaux ou circonférentiels des pneumatiques par l'augmentation de l'inertie de flexion sur chant du sommet, ce qui induit une amélioration sensible de la performance en comportement. Dans certains pneumatiques, l'armature de sommet ne comprend qu'une seule couche de travail et l'invention fonctionne également dans ce cas. L'armature de sommet peut comprendre d'autre couche d'éléments de renforcement comme par exemple une couche de frettage.

L'amplitude de l'ondulation d'une couche de travail se mesure sur une ou plusieurs coupes méridiennes. L'amplitude est égale à la distance radiale entre le point le plus radialement extérieur de la couche de travail considérée sous la nervure considérée et le point le plus radialement intérieur de ladite couche à l'aplomb de la face de fond des sillons circonférentiels ou des rainures constituant les frontières circonférentielles de ladite nervure. Pour mesurer l'amplitude de la couche de travail ces deux points seront de même nature du point de vue de la géométrie de la couche de travail. Ils seront pris tous les deux soit sur la fibre neutre, soit sur la courbe radialement intérieure (CRI), soit sur la courbe radialement extérieure (CRE) de la couche de travail considérée.

L'amplitude de cette ondulation doit être au moins égale à 1 mm, pour avoir des effets significatifs à l'échelle du pneumatique. Ainsi la distance radiale (do), entre la courbe radialement extérieure (CRE) de la couche de travail la plus radialement extérieure et la surface de roulement est inférieure d'au moins 1 mm à la distance radiale (dc) entre la courbe radialement extérieure (CRE) de la couche de travail la plus radialement extérieure et la surface de roulement, distance mesurée à l'aplomb de la face de fond du sillon circonférentiel ou des rainures constituant les frontières circonférentielles de la nervure en surplomb de ladite ondulation.

Néanmoins, la présence de cette ou de ces ondulations a pour effet d'éloigner localement une ou plusieurs couches de l'armature de sommet de la ou des couches de l'armature de carcasse. Or, les inventeurs à l'origine de l'invention ont constaté que la performance en breaking energy était, entre autres, dépendante du couplage mécanique entre les couches de l'armature de sommet et la ou les couches de l'armature de carcasse. En effet, plus les couches des armatures sont éloignées radialement les unes des autres, moins le couplage mécanique est important et moins élevée est la perforance en breaking energy. Ainsi, avec une amplitude d'au moins 1 mm, le couplage mécanique est significativement réduit et la performance en breaking energy significativement altérée sauf à prévoir, conformément à l'invention, une armature de renforcement local agencée radialement entre l'armature de carcasse et la couche de travail la plus radialement extérieure. Une telle armature de renforcement local permet d'une part, de restaurer voire d'augmenter la performance au test de breaking energy par rapport à un pneumatique dépourvu d'ondulation et, d'autre part, de créer l'ondulation en écartant radialement la couche de travail la plus radialement extérieure de la ou des couches de l'armature de carcasse.

Ainsi, l'invention permet d'augmenter la performance en breaking energy de l'ordre de 15%, mais sans ajouter de volume de matériaux contrairement aux solutions avec des armatures de renforcement local non positionnées dans des ondulations de la couche de travail la plus radialement extérieure ou des couches de travail.

Le test de breaking Energy se fait en positionnant un indenteur sur une nervure et non dans un sillon circonférentiel. Se positionner dans un sillon circonférentiel diminuerait la distance de l'indenteur à l'armature de sommet et à l'armature de carcasse et diminuerait donc les efforts de flexion s'exerçant sur ces éléments au cours du test. Pour cette raison l'indenteur est toujours positionné sur une nervure. Il n'est donc pas utile d'avoir un renforcement local au-delà des nervures dans la mesure où les éléments de renforcement de l'armature de renforcement local sont suffisamment longs pour reprendre des efforts de manière couplée avec les éléments de renforcement des autres couches de sommet d'éléments de renforcement. Dans le cas contraire, des éléments de renforcement très courts, de la largeur axiale d'une nervure aurait le même comportement qu'un élément brisé d'une couche d'éléments de renforcement et ne résisterait pas davantage à la progression de l'indenteur. Afin d'avoir des éléments de renforcement longs mais dont la largeur axiale est limitée par la largeur de la nervure, l'idée est de les positionner avec un angle avec la direction circonférentielle (XX') du pneumatique, dont la valeur absolue est au plus égale à 5°.

Par ailleurs le test de breaking energy ne précise pas dans le cas où un sillon circonférentiel passe au centre de la bande de roulement sur quelle nervure parmi les deux nervures centrales de ce type de sculpture, positionner l'indenteur. Pour améliorer le résultat du test, il suffit de disposer une couche de renforcement local à l'aplomb d'une ondulation de la couche de travail la plus radialement extérieure à l'aplomb d'une des nervures centrales situées de part et d'autre dudit sillon circonférentiel. Compte tenu de la taille des sillons circonférentiels, on peut définir les deux nervures centrales existant dans cette disposition comme une nervure telle que le plan circonférentiel médian passe à une distance d'une des frontières de ladite nervure centrale au plus égale à 15 mm.

Avec un angle des éléments de renforcement de la couche de renforcement local avec l'axe circonférentiel restreint à au plus 5° en valeur absolue, les éléments de renforcement de ou des armatures de renforcement local sont suffisamment longs pour être davantage couplés aux autres éléments de renforcement des couches des armatures de sommet ou de carcasse entre lesquels ils sont placés. En effet, dans ce cas, les éléments de renforcement de l'armature local de renforcement peuvent être des fils ou des bandes de fils continus posés circonférentiellement.

En outre et de manière étonnante, l'invention réduit la dispersion du test de breaking energy d'au moins 25% et donc permet une meilleure maîtrise de la performance.

Pour avoir des gains en résistance au roulement et en comportement et pas de dégradation de l'endurance, il est avantageux que l'amplitude de chaque ondulation centrale de la couche de travail la plus radialement extérieure soit au moins égale à 1.5 mm de préférence au moins égale à 2 mm, et au plus égale à 5 mm de préférence au plus égale à 3 mm.

De manière à laisser les couches de travail couplées sur toute leur largeur axiale, une solution préférée est de positionner l'armature de renforcement local entre l'armature de carcasse et la couche de travail la plus radialement intérieure. Il est donc préféré que l'armature de renforcement local soit radialement extérieure à l'armature de carcasse radialement intérieure à la couche de travail la plus radialement intérieure.

Pour fiabiliser davantage la performance du pneumatique en endurance agression sommet, il est avantageux que la couche de travail la plus radialement extérieure comprenne une ondulation centrale à l'aplomb de chaque nervure centrale, chaque ondulation centrale étant en surplomb d'une armature de renforcement local.

Pour être efficace, il est avantageux que la largeur axiale de chaque armature de renforcement local soit au moins égale à 5 mm, et au plus égale à la largeur axiale de la nervure centrale en surplomb de ladite armature de renforcement local.

La performance est d'autant plus intéressante que chaque armature de renforcement local (6), comprend une couche d'éléments de renforcement, parallèles entre eux et formant avec la direction circonférentielle (XX') du pneumatique, un angle orienté dont la valeur absolue est au plus égale à 0,5°, de préférence au plus égale à 0.2°, de préférence égale à 0°. Dans de tels cas, l'armature de renforcement local est constituée d'un élément de renforcement continu posé circonférentiellement unitairement ou en bandelette de plusieurs éléments de renforcement. Pour le cas d'une pose d'un unique élément de renforcement, les différents tours dudit éléments de renforcement constituent les éléments de renforcement parallèles entre eux.

L'utilisation de câbles ou fils métalliques pour la ou les couches de renforcement local est possible. Néanmoins pour diminuer la masse, faciliter la mise à plat et améliorer la performance bruit du pneumatique, Il est avantageux que les éléments de renforcement de chaque armature de renforcement local soit en textile, de préférence, de type polyamide aliphatique, polyamide aromatique, combinaison de polyamide aliphatique et de polyamide aromatique, polytéréphtalate d'éthylène ou rayonne, parallèles entre eux, chacun de ces matériaux ayant des intérêts différents dans ce contexte de résistance et d'allongement à la rupture entre autres critères. Préférentiellement les éléments de renforcement de l'armature de renforcement local sont d'une épaisseur radiale au plus égale à 1.5 mm.

Pour un bon fonctionnement de l'invention, il est préféré que la force à la rupture des éléments de renforcement de chaque armature de renforcement local soit au moins égale à 20 daN, au plus égale à 120 daN et leur allongement à rupture Acc soit au moins égale à 6%, préférentiellement au plus égal à 30%, mesurés selon la norme ASTM D885/D885M -10A de 2014.

Pour des gains de productivité, une réalisation de l'invention est que chaque ondulation de la couche de travail la plus radialement extérieure est en surplomb d'au plus une armature de renforcement local, chaque armature de renforcement local étant réalisée par l'enroulement continu d'une bande d'au moins deux éléments de renforcement, pour générer au plus 3 couches d'éléments de renforcement. Les épaisseurs multiples peuvent être obtenues par enroulements successifs d'une ou de plusieurs bandelettes mais aussi par tuilage qui impliquent un chevauchement d'une bandelette entre deux tours de pose.

Pour éviter des frottements entre les éléments de renforcement de la ou les armatures de renforcement local, la distance axiale entre deux éléments de renforcement contigus de l'armature de renforcement local est au moins égale à 0.2mm et au plus égale à 0.4mm pour garder une performance optimale en breaking energy.

Lorsque le pneumatique a deux couches de travail, une solution réalisable qui permet de minimiser les amplitudes des ondulations de chaque couche de travail, consiste, en ce qu'une première armature de renforcement local soit radialement extérieure à l'armature de carcasse, radialement intérieure à la couche de travail la plus radialement intérieure et une deuxième armature de renforcement local est radialement extérieure à la couche de travail la plus radialement intérieure et radialement intérieure à la couche de travail la plus radialement extérieure.

Un des avantages de l'invention est, que, par rapport à l'état de l'art où l'ajout d'une armature de renforcement local se fait sans la coupler avec les nervures de la bande de roulement, les éléments de renforcement de la ou les couches de carcasse ont une courbure méridienne de signe constant à l'aplomb de la couche de travail la plus étroite de l'armature de sommet. Ceci permet d'éviter les flambements locaux de la ou les couches de l'armature de carcasse et donc d'en préserver l'endurance.

L'invention nécessite quelques aménagements lors de la fabrication. L'ajout d'une armature de renforcement local dont l'angle est proche de 0° sous une nervure va perturber, selon la tension de pose, la mise à plat de ladite nervure et donc risquer de générer une usure irrégulière des bords axiaux de la nervure. Ce problème peut être résolu en réglant la tension de pose des éléments de renforcement de l'armature de renforcement local. Plus il y aura de nervures ayant à leurs aplombs des armatures de renforcement local, plus les réglages en fabrication seront complexes. Il est donc avantageux pour réduire cette complexité qu'une ondulation de la couche de travail la plus radialement extérieure soit présente uniquement à l'aplomb des nervures centrales.

La pose de telles couches de renforcement local avec une tension de pose est plus facilement réalisable sur des pneumatiques fabriqués sur un noyau dur, procédé connu de l'homme de l'art, qui permettra d'assurer facilement la géométrie du pneumatique après cuisson. Néanmoins, poser une telle couche avec une tension de pose est également réalisable sur un procédé avec un tambour d'assemblage.

En revanche pour les gains en comportement et en résistance au roulement, il est avantageux qu'une ondulation de la couche de travail la plus radialement extérieure soit présente à l'aplomb de toutes les nervures de la bande de roulement.

Pour maximiser la performance de l'armature de sommet en perforation et pas seulement pour le test de breaking-energy, il est avantageux qu'une armature de renforcement local soit présente à l'aplomb de toutes les ondulations de la couche de travail la plus radialement extérieure.

Pour une performance optimale en perforation et agression du sommet au niveau des rainures ou des sillons circonférentiels, sans pénaliser la résistance au roulement, la distance radiale (d1) entre la courbe radialement extérieure (CRE) de la couche de travail la plus radialement extérieure et la face de fond des sillons circonférentiels, est au moins égale à 1 mm et au plus égale à 5 mm, préférentiellement au moins égale à 2 mm et au plus égale à 4 mm. En deçà de limites inférieures, le pneumatique pourrait être trop sensible aux agressions. Au-delà des limites supérieures, la résistance au roulement du pneumatique serait pénalisée.

L'amplitude de l'ondulation est au moins égale à 1 mm mais limitée à 5 mm en raison des rayons de courbures à imposer aux couches de travail métalliques, rigides et donc peu déformables.

Il est avantageux que la bande de roulement comprenne, par exemple dans une rainure ou un sillon circonférentiel de la bande de roulement, au moins un témoin d'usure, et que la distance radiale minimale (du) entre la courbe radialement extérieure (CRE) de la couche la plus radialement extérieure de l'armature de sommet et la surface de roulement soit au moins égale à la distance radiale (df) entre la surface de roulement et le point le plus radialement extérieur du témoin d'usure. En effet, il est important que l'utilisateur puisse percevoir que le pneumatique est usé, grâce au témoin d'usure et cela avant de voir les éléments de renforcement de la couche la plus radialement extérieure de l'armature de sommet apparaître au niveau de la surface de roulement.

Avantageusement la distance radiale minimale (du) entre la courbe radialement extérieure (CRE) de la couche la plus radialement extérieure de l'armature de sommet et la surface de roulement est au plus égale à la profondeur D du sillon circonférentiel le plus proche augmentée de 2 mm et au moins égale à la profondeur D du sillon circonférentiel le plus proche diminuée de 2 mm. Cette solution permet un positionnement idéal de la couche d'éléments de renforcement la plus radialement extérieure de l'armature de sommet et la surface de roulement. La distance radiale minimale (du) entre la courbe radialement extérieure (CRE) de la couche la plus radialement extérieure de l'armature de sommet et la surface de roulement, est forcément mesurée sur la portion radialement extérieure de l'armature sommet, donc au niveau d'une ondulation.

Préférentiellement la profondeur D d'une rainure majeure ou d'un sillon circonférentiel est au moins égale à 6 mm, et au plus égale à 20 mm. Les profondeurs de sculpture entre 6 et 10 mm permettent un bon compromis entre les performances en usure et en résistance au roulement dans de nombreux pneumatiques de tourisme. Les profondeurs de sculpture entre 10 et 20 mm sont intéressantes pour les mêmes compromis dans les pneumatiques pour véhicules portant de lourdes charges. L'invention n'est pas limitée à des pneumatiques d'un usage particulier.

Dans le cas où la couche d'éléments de renforcement la plus radialement extérieure est une couche de frettage, il est avantageux que les éléments de renforcement de ladite couche soient en textile, de préférence de type polyamide aliphatique, polyamide aromatique, combinaison de polyamide aliphatique et de polyamide aromatique, polytéréphtalate d'éthylène ou rayonne, parallèles entre eux et formant, avec la direction circonférentielle (XX') du pneumatique, un angle B au plus égal à 10° en valeur absolue.

Il est préféré que l'armature de sommet consiste en 2 couches de travail ayant des angles opposés et une couche de frettage, comme de nombreuses armatures de sommet actuelles.

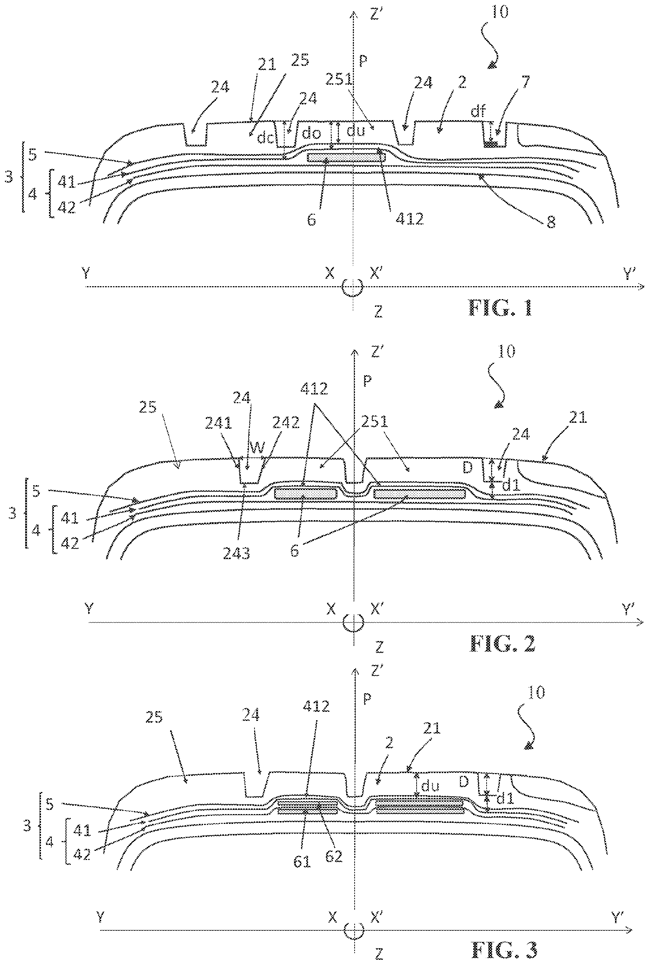

Les caractéristiques et autres avantages de l'invention seront mieux compris à l'aide des figures 1 à 5, lesdites figures n'étant pas représentées à l'échelle mais de façon simplifiée, afin de faciliter la compréhension de l'invention :
- la figure 1 représente une coupe méridienne du sommet d'un pneumatique selon l'invention avec une ondulation (412) à l'aplomb de la nervure centrale (251) où passe le plan médian circonférentiel (P). Elle illustre la couche de renforcement local (6) positionnée sous l'ondulation (412) de la couche de travail (41) la plus radialement extérieure et les différentes distances radiales do, du, de et df.
- la figure 2 représente une coupe méridienne du sommet d'un pneumatique selon l'invention avec une ondulation (412) et une couche de renforcement local (6) à l'aplomb de chaque nervure centrale (251), de part et d'autre du sillon circonférentiel où passe le plan médian circonférentiel (P). Elle illustre également les distances W, D et d1.
- la figure 3 représente une coupe méridienne du sommet d'un pneumatique selon l'invention avec une ondulation (412) et deux couches de renforcement local (61,62) à l'aplomb de chaque nervure centrale (251), respectivement sous chaque couche de travail (41, 42) de part et d'autre du sillon circonférentiel où passe le plan médian circonférentiel (P).

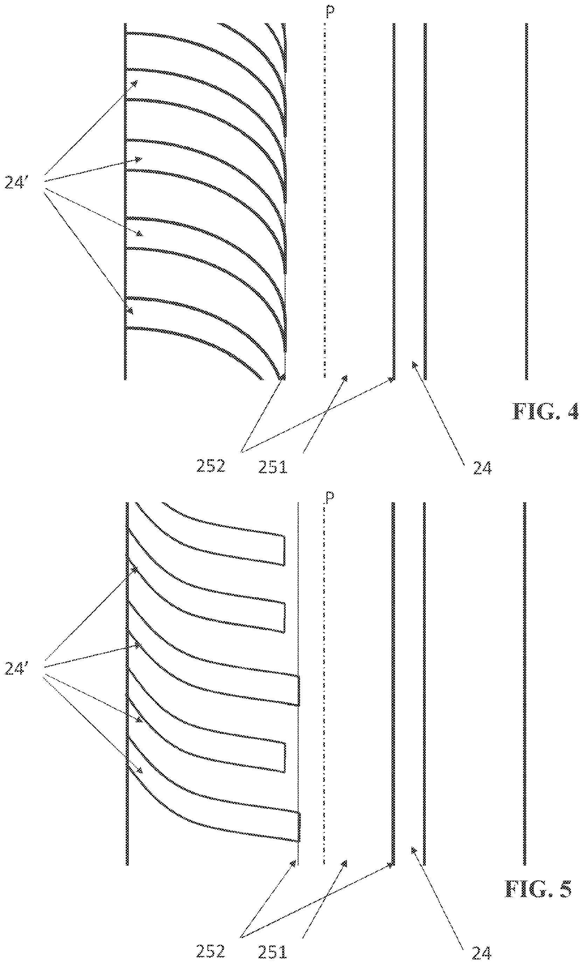

- les figures 4 et 5 représentent des motifs de sculpture d'une bande de roulement et notamment un ensemble circonférentiel de rainures (24') formant une des frontières circonférentielles (252) de la nervure centrale (251).

De nombreuses combinaisons d'agencement et de dimension des ondulations sous les nervures, et d'ensemble circonférentiel de rainures sont possibles. Les figures et la description ne sauraient toutes les décrire explicitement.

La figure 1 représente schématiquement la coupe méridienne du sommet du pneumatique 10 selon l'invention. A chaque plan méridien est associé un repère cartésien (XX', YY', ZZ'). Le pneumatique 10 comporte une bande de roulement 2 destinée à entrer en contact avec un sol par l'intermédiaire d'une surface de roulement 21. Dans la bande de roulement, sont disposées des rainures et des sillons circonférentiels 24 délimitant des nervures 25 dont la nervure centrale 251 par laquelle passe le plan circonférentiel médian P. Dans au moins un des sillons 24, le pneumatique 10 comprend au moins un témoin d'usure 7. Le pneumatique 10 comprend en outre une armature de sommet 3 comprenant une armature de travail 4 et ici pour l'exemple, une armature de frettage 5. L'armature de travail comprend au moins une couche de travail et ici pour l'exemple deux couches de travail 41 et 42 comprenant chacune des éléments de renforcement parallèles entre eux. L'armature de sommet 3 est radialement extérieure à une armature de carcasse 8. La figure 1 représente également à l'aplomb de cette nervure centrale 251 une ondulation 412 de la couche de travail la plus radialement extérieure 41 et à l'aplomb de cette ondulation une couche de renforcement local 6. Dans cette variante seule la couche de travail 41 la plus radialement extérieure est ondulée.

La figure 2 représente une variante de l'invention avec une ondulation 412 et une couche de renforcement local 6 à l'aplomb de chaque nervure centrale 251, de part et d'autre du sillon circonférentiel où passe le plan médian circonférentiel P. La figure représente les sillons ayant chacun des faces latérales 241 et 242 et une face de fond 243 et une largeur W, distance axiale maximale entre les faces latérales, possiblement différente d'un sillon 24 à l'autre. Dans cette variante seule la couche de travail 41 la plus radialement extérieure est ondulée.

La figure 3 représente une variante de l'invention proche de celle de la figure 2 avec 2 nervures centrales 251 mais, dans cette variante, les deux couches de travail 41 et 42 sont ondulées, et sous chaque ondulation est positionnée une couche de renforcement local.

Les figures 1, 2, 3 représentent les distances radiales suivantes :
- D : la profondeur d'une rainure, distance radiale maximale entre la surface de roulement 21 et la face de fond 243 du sillon circonférentiel 24,
- dc : distance radiale entre la courbe radialement extérieure CRE de la couche de travail 41 la plus radialement extérieure et la surface de roulement 21, distance à l'aplomb de la face de fond 243 du sillon circonférentiel 24 la plus proche de ladite ondulation 412.
- df : la distance radiale entre la surface de roulement 21 et le point le plus radialement extérieur du témoin d'usure 7.
- do : la distance radiale entre la courbe radialement extérieure CRE de la couche de travail 41 la plus radialement extérieure et la surface de roulement au niveau de l'ondulation 412.
- du : la distance radiale minimale entre la courbe radialement extérieure CRE de la couche la plus radialement extérieure de l'armature de sommet 3 et la surface de roulement 21.
- d1 : la distance radiale entre la courbe radialement extérieure CRE de la couche de travail la plus radialement extérieure 41 et la face de fond 243 des sillons circonférentiels 24.

Une coupe méridienne du pneumatique est obtenue par découpage du pneumatique selon deux plans méridiens. Cette ou ces coupes servent à déterminer les différentes distances radiales.

Les figures 4 et 5 représentent des bandes de roulement où une nervure 251 est délimitée d'un côté par un sillon circonférentiel 24 et de l'autre côté par un ensemble circonférentiel de rainures 24'. La figure 4 représente un ensemble circonférentiel de rainures 24' pour lequel la frontière circonférentielle 252 de la nervure centrale est évidente. La figure 5 représente un ensemble circonférentiel de rainures 24' pour laquelle la position axiale des rainures dudit ensemble varie. Dans ce cas la frontière 252 de la nervure centrale n'est pas que sensiblement axiale. Dans ce cas, tout comme pour un sillon sensiblement circonférentiel, on extrapole ladite frontière passant par les points de ladite frontière 252 les plus proches du centre de la nervure centrale par un plan circonférentiel.

L'invention a été réalisée sur un pneumatique A de dimension 295/35R20 destiné à équiper un véhicule de tourisme. Les profondeurs D des rainures de la sculpture sont comprises entre 4 et 7 mm et égale à 7 mm pour les sillons circonférentiels, pour des largeurs W variables pour les rainures et égales à 15 mm pour les sillons. L'armature sommet est composée de deux couches de travail dont les éléments de renforcement font un angle de + ou - 38° avec la direction circonférentielle et d'une couche de frettage dont les éléments de renforcement font un angle de + ou - 3° avec la direction circonférentielle.

La couche de travail la plus radialement extérieure est ondulée sous la nervure centrale de la bande de roulement. L'amplitude de l'ondulation sous la nervure centrale est de 1,2 mm. La largeur axiale de l'ondulation est égale à 21 mm. Dans l'ondulation est positionnée une couche de renforcement local de largeur axiale de 20 mm constituée d'un hybride aramide nylon de diamètre égal à 0.65 mm à un pas de pose de 0.85 mm. La distance radiale d1 entre la courbe radialement extérieure CRE de la couche de travail la plus radialement extérieure 41 et la face de fond 243 des sillons circonférentiels 24, est comprise entre 2 mm et 3,5 mm.

Les pneumatiques A ont été comparés avec les pneumatiques B de même dimension, possédant les mêmes caractéristiques à cela près que les couches de travail ne sont pas ondulées et qu'il n'y a pas de couche de renforcement local.

Le gain en résistance au roulement a été évalué sur une machine standard pour des mesures normalisées ISO 2850 :2009. Les tests montrent un gain de plus 2% par rapport au pneumatique B de référence.

Par ailleurs, une mesure de la caractéristique Dz du modèle de comportement des pneumatiques, dit Pacejka, bien connue de l'homme de l'art, montre une augmentation de cette caractéristique pour une pression à 2.6 bars à chaud de 2 à 3%. Le gain en adhérence sol sec varie entre 0 et 1 % selon les conditions de sollicitation.

Le gain en performance en breaking energy du pneumatique A comparativement au pneumatique B est de 15% sans augmentation de masse.

## Revendications

1. Pneumatique (10) pour véhicule comprenant :
- une bande de roulement (2) destinée à entrer en contact avec un sol par l'intermédiaire d'une surface de roulement (21), un plan circonférentiel médian (P) passant par le centre de la bande de roulement (21), la surface de roulement comprenant des rainures, les rainures formant un espace débouchant sur la surface de roulement (21) et étant délimitée par au moins deux faces latérales principales (241, 242) reliées par une face de fond (243),
- au moins une et au plus deux nervures (251) centrales, délimitées par des frontières circonférentielles (252), les frontières circonférentielles (252) des nervures centrales étant des rainures sensiblement circonférentielles, appelées sillons circonférentiels (24), ou un ensemble circonférentiel de rainures (24'), une nervure centrale étant telle que le plan circonférentiel médian passe entre ses deux frontières ou, si le plan circonférentiel médian passe par un sillon circonférentiel, telle que le plan circonférentiel médian passe à une distance d'une des frontières de ladite nervure (25) centrale, au plus égale à 15 mm, les sillons circonférentiels ou les rainures de l'ensemble circonférentiel de rainures (24') formant les frontières du ou des nervures centrales ayant une largeur W définie par la distance entre deux faces latérales (241, 242), au moins égale à 5 mm et une profondeur D définie par la distance radiale maximale entre la surface de roulement (21) et la face de fond (243), au moins égale à 2 mm,
- une armature de sommet (3), radialement intérieure à la bande de roulement (2), comprenant une armature de travail (4), et une armature de carcasse (8) radialement intérieure à l'armature de sommet comprenant au moins une couche de carcasse (8), l'armature de travail (4) comprenant au moins une couche de travail (41, 42), chaque couche de travail (41) s'étendant radialement depuis une courbe radialement intérieure (CRI) jusqu'à une courbe radialement extérieure (CRE), chaque couche de travail (41) comprenant des éléments de renforcement, au moins partiellement métalliques enrobés par un matériau élastomérique, parallèles entre eux et formant avec la direction circonférentielle (XX') du pneumatique, un angle dont la valeur absolue est au moins égale à 15° et au plus égale à 50°, la couche de travail (41) la plus radialement extérieure comprenant au moins une ondulation centrale (412) à l'aplomb d'au moins une nervure centrale (26), d'une amplitude au moins égale à 1 mm, chaque ondulation centrale (412) étant telle que la portion de la couche de travail (41) de l'ondulation centrale (412) est radialement extérieure à la portion de la couche de travail (41) à l'aplomb des faces de fond (243) des sillons circonférentiels ou des rainures de l'ensemble circonférentiel de rainures délimitant la nervure centrale (251) en surplomb de l'ondulation centrale considérée (412), **caractérisé en ce qu'**au moins une armature de renforcement local (6), comprenant au moins une couche d'éléments de renforcement, parallèles entre eux et formant avec la direction circonférentielle (XX') du pneumatique, un angle dont la valeur absolue est au plus égale à 5°, est à l'aplomb d'au moins une ondulation centrale (412) de la couche de travail (41) la plus radialement extérieure.

2. Pneumatique (10) selon la revendication 1, dans lequel l'amplitude de chaque ondulation centrale (412) de la couche de travail (41) la plus radialement extérieure est au moins égale à 1.5 mm de préférence au moins égale à 2 mm, et au plus égale à 5 mm de préférence au plus égale à 3 mm.

3. Pneumatique (10) selon l'une quelconque des revendications précédentes, dans lequel l'armature de renforcement local (6) est radialement extérieure à l'armature de carcasse (8), radialement intérieure à la couche de travail la plus radialement intérieure (42).

4. Pneumatique (10) selon l'une quelconque des revendications précédentes, dans lequel la couche de travail (41) la plus radialement extérieure comprend une ondulation centrale (412) à l'aplomb de chaque nervure centrale (251), chaque ondulation centrale étant en surplomb d'une armature de renforcement local (6).

5. Pneumatique (10) selon l'une quelconque des revendications précédentes, dans lequel la largeur axiale de chaque armature de renforcement local est au moins égale à 5 mm, et au plus égale à la largeur axiale de la nervure centrale en surplomb de ladite armature de renforcement local (6).

6. Pneumatique (10) selon l'une quelconque des revendications précédentes, dans lequel chaque armature de renforcement local (6), comprend une couche d'éléments de renforcement, parallèles entre eux et formant avec la direction circonférentielle (XX') du pneumatique, un angle orienté dont la valeur absolue est au plus égale à 0,5°, de préférence au plus égale à 0.2°, de préférence égale à 0°.

7. Pneumatique (10) selon l'une quelconque des revendications précédentes, dans lequel les éléments de renforcement de chaque armature de renforcement local sont en textile, de préférence de type polyamide aliphatique, polyamide aromatique, combinaison de polyamide aliphatique et de polyamide aromatique, polytéréphtalate d'éthylène ou rayonne, parallèles entre eux, et préférentiellement d'une épaisseur radiale au plus égale à 1.5 mm.

8. Pneumatique (10) selon l'une quelconque des revendications précédentes, dans lequel la force à la rupture des éléments de renforcement de chaque armature de renforcement local (6) est au moins égale à 20 daN, au plus égale à 120 daN et leur allongement à rupture Acc au moins égale à 6%, préférentiellement au plus égal à 30%.

9. Pneumatique (10) selon l'une quelconque des revendications précédentes, dans lequel chaque ondulation (412) de la couche de travail (41) la plus radialement extérieure est en surplomb d'au plus une armature de renforcement local (6), chaque armature de renforcement local (6) étant réalisée par l'enroulement continu d'une bande d'au moins deux éléments de renforcement, pour générer au plus 3 couches d'éléments de renforcement.

10. Pneumatique (10) selon la revendication précédente, dans lequel la distance axiale entre deux éléments de renforcement contigus de l'armature de renforcement local (6) est au moins égale à 0.2mm et au plus égale à 0.4mm.

11. Pneumatique (10) selon l'une quelconque des revendications précédentes, comprenant deux couches de travail (41,42) et dans lequel une première armature (61) de renforcement local est radialement extérieure à l'armature de carcasse (8), radialement intérieure à la couche de travail (41) la plus radialement intérieure et une deuxième armature (62) de renforcement local est radialement extérieure à la couche de travail (41) la plus radialement intérieure et radialement intérieure à la couche de travail (42) la plus radialement extérieure.

12. Pneumatique (10) selon l'une quelconque des revendications précédentes, dans lequel les éléments de renforcement de la ou les couches de carcasse (8) ont une courbure méridienne de signe constant à l'aplomb de la couche de travail la plus étroite de l'armature de sommet.

13. Pneumatique (10) selon l'une quelconque des revendications 1 à 12, dans lequel une ondulation (412) de la couche de travail (41) la plus radialement extérieure est présente uniquement à l'aplomb des nervures centrales (251).

14. Pneumatique (10) selon l'une quelconque des revendications 1 à 12, dans lequel une ondulation (412) de la couche de travail (41) la plus radialement extérieure est présente à l'aplomb de toutes les nervures (25,251) de la bande de roulement (2).

15. Pneumatique (10) selon l'une quelconque des revendications précédentes, dans lequel une armature de renforcement local (6) est présente à l'aplomb de toutes les ondulations (412) de la couche de travail (41) la plus radialement extérieure.

## Patentansprüche

1. Reifen (10) für ein Fahrzeug, beinhaltend:
- eine Lauffläche (2), die dazu bestimmt ist, mittels einer Laufoberfläche (21) mit einem Boden in Kontakt zu kommen, wobei eine Umfangsmittelebene (P) durch die Mitte der Lauffläche (21) verläuft, wobei die Laufoberfläche Rillen beinhaltet, wobei die Rillen einen Raum bilden, der an der Laufoberfläche (21) mündet und durch mindestens zwei Hauptseitenflächen (241, 242), die durch eine Bodenfläche (243) verbunden sind, begrenzt wird,
- mindestens eine und höchstens zwei mittige Rippen (251), die durch umlaufende Begrenzungen (252) begrenzt werden, wobei die umlaufenden Begrenzungen (252) der mittigen Rippen im Wesentlichen umlaufende Rillen, die als umlaufende Nuten (24) bezeichnet werden, oder ein umlaufender Satz Rillen (24') sind, wobei eine mittige Rippe derart ist, dass die Umfangsmittelebene zwischen ihren zwei Begrenzungen verläuft, oder, wenn die Umfangsmittelebene durch eine umlaufende Nut verläuft, derart ist, dass die Umfangsmittelebene in einem Abstand zu einer der Begrenzungen der mittigen Rippe (25) verläuft, der höchstens 15 mm beträgt, wobei die umlaufenden Nuten oder die Rillen des umlaufenden Satzes Rillen (24'), die die Begrenzungen der einen oder der mehreren mittigen Rippen bilden, eine Breite W, die durch den Abstand zwischen zwei Seitenflächen (241, 242) definiert wird, von mindestens 5 mm und eine Tiefe D, die durch den maximalen radialen Abstand zwischen der Laufoberfläche (21) und der Bodenfläche (243) definiert wird, von mindestens 2 mm aufweisen,
- eine Scheitelbewehrung (3), die zu der Lauffläche (2) radial innen liegend ist und eine Arbeitsbewehrung (4) beinhaltet, und eine Karkassenbewehrung (8), die zu der Scheitelbewehrung radial innen liegend ist und mindestens eine Karkassenlage (8) beinhaltet, wobei die Arbeitsbewehrung (4) mindestens eine Arbeitslage (41, 42) beinhaltet, wobei sich jede Arbeitslage (41) von einer radial innen liegenden Kurve (CRI) bis zu einer radial außen liegenden Kurve (CRE) radial erstreckt, wobei jede Arbeitslage (41) mindestens teilweise metallische Verstärkungselemente beinhaltet, die von einem Elastomermaterial umhüllt sind, untereinander parallel sind und mit der Umfangsrichtung (XX') des Reifens einen Winkel bilden, dessen Absolutwert mindestens 15° und höchstens 50° beträgt, wobei die radial am weitesten außen liegende Arbeitslage (41) mindestens eine mittige Wellung (412) lotrecht unter mindestens einer mittigen Rippe (26) mit einer Amplitude von mindestens 1 mm beinhaltet, wobei jede mittige Wellung (412) derart ist, dass der Abschnitt der Arbeitslage (41) der mittigen Wellung (412) zu dem Abschnitt der Arbeitslage (41) lotrecht unter den Bodenflächen (243) der umlaufenden Nuten oder der Rillen des umlaufenden Satzes Rillen, die die mittige Rippe (251) lotrecht über der betrachteten mittigen Wellung (412) begrenzen, radial außen liegend ist, **dadurch gekennzeichnet, dass** sich mindestens eine lokale Verstärkungsbewehrung (6), die mindestens eine Lage aus Verstärkungselementen beinhaltet, die untereinander parallel sind und mit der Umfangsrichtung (XX') des Reifens einen Winkel bilden, dessen Absolutwert höchstens 5° beträgt, lotrecht unter mindestens einer mittigen Wellung (412) der radial am weitesten außen liegenden Arbeitslage (41) befindet.

2. Reifen (10) nach Anspruch 1, wobei die Amplitude jeder mittigen Wellung (412) der radial am weitesten außen liegenden Arbeitslage (41) mindestens 1,5 mm, vorzugsweise mindestens 2 mm und höchstens 5 mm, vorzugsweise höchstens 3 mm beträgt.

3. Reifen (10) nach einem beliebigen der vorhergehenden Ansprüche, wobei die lokale Verstärkungsbewehrung (6) zu der Karkassenbewehrung (8) radial außen liegend, zu der am weitesten innen liegenden Arbeitslage (42) radial innen liegend ist.

4. Reifen (10) nach einem beliebigen der vorhergehenden Ansprüche, wobei die radial am weitesten außen liegende Arbeitslage (41) eine mittige Wellung (412) lotrecht unter jeder mittigen Rippe (251) beinhaltet, wobei sich jede mittige Wellung lotrecht über einer lokalen Verstärkungsbewehrung (6) befindet.

5. Reifen (10) nach einem beliebigen der vorhergehenden Ansprüche, wobei die axiale Breite jeder lokalen Verstärkungsbewehrung mindestens 5 mm beträgt und höchstens gleich der axialen Breite der mittigen Rippe lotrecht über der lokalen Verstärkungsbewehrung (6) ist.

6. Reifen (10) nach einem beliebigen der vorhergehenden Ansprüche, wobei jede lokale Verstärkungsbewehrung (6) eine Lage aus Verstärkungselementen beinhaltet, die untereinander parallel sind und mit der Umfangsrichtung (XX') des Reifens einen gerichteten Winkel bilden, dessen Absolutwert höchstens 0,5°, vorzugsweise höchstens 0,2°, vorzugsweise 0° beträgt.

7. Reifen (10) nach einem beliebigen der vorhergehenden Ansprüche, wobei die Verstärkungselemente jeder lokalen Verstärkungsbewehrung aus Textil, vorzugsweise vom Typ aliphatisches Polyamid, aromatisches Polyamid, Kombination aus aliphatischem Polyamid und aromatischem Polyamid, Polyethylenterephthalat oder Kunstseide, sind, untereinander parallel sind und vorzugsweise eine radiale Dicke von höchstens 1,5 mm aufweisen.

8. Reifen (10) nach einem beliebigen der vorhergehenden Ansprüche, wobei die Bruchkraft der Verstärkungselemente jeder lokalen Verstärkungsbewehrung (6) mindestens 20 daN, höchstens 120 daN beträgt und ihre Bruchdehnung Acc mindestens 6 %, vorzugsweise höchstens 30 % beträgt.

9. Reifen (10) nach einem beliebigen der vorhergehenden Ansprüche, wobei sich jede Wellung (412) der radial am weitesten außen liegenden Arbeitslage (41) lotrecht über höchstens einer lokalen Verstärkungsbewehrung (6) befindet, wobei jede lokale Verstärkungsbewehrung (6) durch das kontinuierliche Wickeln eines Streifens von mindestens zwei Verstärkungselementen hergestellt wird, um höchstens 3 Verstärkungselementlagen zu erzeugen.

10. Reifen (10) nach dem vorhergehenden Anspruch, wobei der axiale Abstand zwischen zwei benachbarten Verstärkungselementen der lokalen Verstärkungsbewehrung (6) mindestens 0,2 mm und höchstens 0,4 mm beträgt.

11. Reifen (10) nach einem beliebigen der vorhergehenden Ansprüche, der zwei Arbeitslagen (41, 42) beinhaltet, und wobei eine erste lokale Verstärkungsbewehrung (61) zu der Karkassenbewehrung (8) radial außen liegend, zu der radial am weitesten innen liegenden Arbeitslage (41) radial innen liegend ist und eine zweite lokale Verstärkungsbewehrung (62) zu der radial am weitesten innen liegenden Arbeitslage (41) radial außen liegend ist und zu der radial am weitesten außen liegenden Arbeitslage (42) radial innen liegend ist.

12. Reifen (10) nach einem beliebigen der vorhergehenden Ansprüche, wobei die Verstärkungselemente der einen oder der mehreren Karkassenlagen (8) eine Meridiankrümmung mit konstantem Vorzeichen lotrecht unter der schmalsten Arbeitslage der Scheitelbewehrung aufweisen.

13. Reifen (10) nach einem beliebigen der Ansprüche 1 bis 12, wobei eine Wellung (412) der radial am weitesten außen liegenden Arbeitslage (41) nur lotrecht unter den mittigen Rippen (251) vorhanden ist.

14. Reifen (10) nach einem beliebigen der Ansprüche 1 bis 12, wobei eine Wellung (412) der radial am weitesten außen liegenden Arbeitslage (41) lotrecht unter allen mittigen Rippen (25, 251) der Lauffläche (2) vorhanden ist.

15. Reifen (10) nach einem beliebigen der vorhergehenden Ansprüche, wobei eine lokale Verstärkungsbewehrung (6) lotrecht unter allen Wellungen (412) der radial am weitesten außen liegenden Arbeitslage (41) vorhanden ist.

## Claims

1. Tyre (10) for a vehicle, comprising:
- a tread (2) intended to come into contact with the ground via a tread surface (21), a circumferential midplane (P) passing through the centre of the tread (21), the tread surface comprising grooves, the grooves forming a space opening onto the tread surface (21) and being delimited by at least two main lateral faces (241, 242) connected by a bottom face (243),
- at least one and at most two central ribs (251), delimited by circumferential boundaries (252), the circumferential boundaries (252) of the central ribs being substantially circumferential grooves referred to as circumferential grooves (24) or a circumferential set of grooves (24'), a central rib being such that the circumferential midplane passes between its two boundaries or, if the circumferential midplane passes through a circumferential groove, such that the circumferential midplane passes a distance at most equal to 15 mm from one of the boundaries of said central rib (25), the circumferential grooves or the grooves of the circumferential set of grooves (24') that form the boundaries of the central rib or ribs having a width W defined by the distance between two lateral faces (241, 242) at least equal to 5 mm and a depth D defined by the maximum radial distance between the tread surface (21) and the bottom face (243) at least equal to 2 mm,
- a crown reinforcement (3), radially on the inside of the tread (2), comprising a working reinforcement (4), and a carcass reinforcement (8) radially on the inside of the crown reinforcement comprising at least one carcass layer (8), the working reinforcement (4) comprising at least one working layer (41, 42), each working layer (41) extending radially from a radially interior curve (RIC) to a radially exterior curve (REC), each working layer (41) comprising at least partially metal reinforcing elements coated with an elastomer material which are mutually parallel and make with the circumferential direction (XX') of the tyre an angle of which the absolute value is at least equal to 15° and at most equal to 50°, the radially outermost working layer (41) comprising at least one central undulation (412) in line with at least one central rib (26) with an amplitude at least equal to 1 mm, each central undulation (412) being such that the portion of the working layer (41) of the central undulation (412) is radially on the outside of the portion of the working layer (41) in line with the bottom faces (243) of the circumferential grooves or of the grooves of the circumferential set of grooves delimiting the central rib (251) in a vertical line above the central undulation (412) concerned, **characterized in that** at least one local reinforcement (6), comprising at least one layer of reinforcing elements that are mutually parallel and make with the circumferential direction (XX') of the tyre an angle of which the absolute value is at most equal to 5°, is vertically in line with at least one central undulation (412) of the radially outermost working layer (41).

2. Tyre (10) according to Claim 1, wherein the amplitude of each central undulation (412) of the radially outermost working layer (41) is at least equal to 1.5 mm, preferably at least equal to 2 mm and at most equal to 5 mm, preferably at most equal to 3 mm.

3. Tyre (10) according to either one of the preceding claims, wherein the local reinforcement (6) is radially on the outside of the carcass reinforcement (8), radially on the inside of the radially innermost working layer (42).

4. Tyre (10) according to any one of the preceding claims, wherein the radially outermost working layer (41) comprises a central undulation (412) in line with each central rib (251), each central undulation being vertically in line above a local reinforcement (6).

5. Tyre (10) according to any one of the preceding claims, wherein the axial width of each local reinforcement is at least equal to 5 mm and at most equal to the axial width of the central rib in vertical line above said local reinforcement (6).

6. Tyre (10) according to any one of the preceding claims, wherein each local reinforcement (6) comprises a layer of reinforcing elements that are mutually parallel and form with the circumferential direction (XX') of the tyre an oriented angle of which the absolute value is at most equal to 0.5°, preferably at most equal to 0.2°, preferably equal to 0°.

7. Tyre (10) according to any one of the preceding claims, wherein the reinforcing elements of each local reinforcement are made of textile, preferably of the aliphatic polyamide, aromatic polyamide, a combination of aliphatic polyamide and of aromatic polyamide, polyethylene terephthalate or rayon type, are mutually parallel and preferably have a radial thickness at most equal to 1.5 mm.

8. Tyre (10) according to any one of the preceding claims, wherein the force at break of the reinforcing elements of each local reinforcement (6) is at least equal to 20 daN, at most equal to 120 daN, and their elongation at break Acc is at least equal to 6%, preferably at most equal to 30%.

9. Tyre (10) according to any one of the preceding claims, wherein each undulation (412) of the radially outermost working layer (41) is in vertical alignment above at most one local reinforcement (6), each local reinforcement (6) being produced by continuously winding a strip of at least two reinforcing elements to generate at most 3 layers of reinforcing elements.

10. Tyre (10) according to the preceding claim, wherein the axial distance between two contiguous reinforcing elements of the local reinforcement (6) is at least equal to 0.2 mm and at most equal to 0.4 mm.

11. Tyre (10) according to any one of the preceding claims, comprising two working layers (41, 42) and wherein a first local reinforcement (61) is radially on the outside of the carcass reinforcement (8), radially on the inside of the radially innermost working layer (41) and a second local reinforcement (62) is radially on the outside of the radially innermost working layer (41) and radially on the inside of the radially outermost working layer (42).

12. Tyre (10) according to any one of the preceding claims, wherein the reinforcing elements of the carcass layer or layers (8) have a meridian curvature of constant sign in line with the narrowest working layer of the crown reinforcement.

13. Tyre (10) according to any one of Claims 1 to 12, wherein an undulation (412) of the radially outermost working layer (41) is present only in line with the central ribs (251).

14. Tyre (10) according to any one of Claims 1 to 12, wherein an undulation (412) of the radially outermost working layer (41) is present in line with all the ribs (25, 251) of the tread (2).

15. Tyre (10) according to any one of the preceding claims, wherein a local reinforcement (6) is present in line with all the undulations (412) of the radially outermost working layer (41).
